# EUROPEAN PATENT APPLICATION

(11) **EP 2 960 771 A1**
(43) Date of publication of application: **30.12.2015**
(21) Application number: 14754944.8
(22) Date of filing: 24.01.2014
(51) Int. Cl.: G06F 3/0488, G06F 3/041, G06F 3/048, G06F 3/0481, H04M 1/247

(54) **INFORMATION PROCESSING TERMINAL, SCREEN CONTROL METHOD, AND SCREEN CONTROL PROGRAM**

(30) Priority: 19.02.2013 JP 2013029779
(71) Applicant: NEC CORPORATION, Tokyo 108-8001 (JP)
(72) Inventor: UNO, Hiroyuki, Kawasaki-shi Kanagawa 211-8666 (JP)
(74) Representative: Vossius & Partner Patentanwälte Rechtsanwälte mbB
(86) International application number: PCT/JP2014/052183
(87) International publication number: WO 2014/129286

(57) **Abstract**

Provided is a technology for preventing erroneous operation of an information processing terminal while allowing for visual recognition of what is displayed on a display screen by using a translucent erroneous operation preventing image. The information processing terminal according to this invention includes a configuration for superimposing a transmissive image on icon images on the display screen, to thereby put apps that are associated with the respective icon images in an erroneous operation preventing state.

## Description

### Technical Field

This invention relates to an information processing terminal, a screen control method, and a screen control program in which an erroneous operation preventing image is superimposed on a display screen of a touch panel.

### Background Art

Touch panels are mounted on many various electronic devices in recent years. In the case of cellular phones, for example, touch panel-mounted smartphones have become widely popular. A smartphone using a touch panel displays application programs such as electronic mail (email) software and an Internet browser as icon images, which enables a user to operate/input intuitively. To browse the Web, for example, the user executes the activation of an application program for browsing the Web by tapping, or otherwise operating, a particular icon image.

When carried around, a smartphone is usually put in a pocket or a bag without its touch panel being covered in any way, and an erroneous contact with a finger, a touch pen, or the like therefore results in unexpected operation. The activation of a camera or a similar application program that is not intended by the user can cause a problem. Accordingly, various screen locks have been developed in order to prevent unintended input operation. For example, with a technology for setting so that the display screen returns to a screen-locked state after the passage of a certain period of time, tapping on the touch panel does not activate an application program when the screen lock is in effect. The display screen is brought out of the screen-locked state by touching the touch panel in a predetermined manner, or other similar types of operation.

An example of this screen lock technology is disclosed in Patent Document 1, which is a technology of unlocking a device by performing a gesture on an unlocking screen. The device of Patent Document 1 displays one or more unlocking images that correspond to given gestures for unlocking the device. The device displays on its touch screen a visual sign regarding the given gestures in order to help the user to recall the gestures. The screen lock on the device that includes a touch sensitive display is unlocked through gestures performed by the user on the touch sensitive display. The screen lock on the device is unlocked when contacts with the display correspond to the given gestures for unlocking the device.

### Prior Art Document

### Patent Document

Patent Document 1: JP-A-2009-521753

### Disclosure of the Invention

### Problem to be Solved by the Invention

With the technology of Patent Document 1, however, the only image that is visually recognizable in the screen locked-state is one for unlocking, and the user has no choice but to unlock the screen lock each and every time. In addition, unlocking the screen lock requires unlocking operation such as sliding, which is a hassle and hinders the information processing terminal from being ready for quick use.

It is therefore an object of this invention to provide an information processing terminal, a screen control method, or a screen control program in which erroneous operation of a touch panel can be prevented and what is displayed can be viewed even when a display screen of the touch panel is in an erroneous operation preventing state.

### Means to Solve the Problem

In view of the above-mentioned problem, one aspect of this invention relates to an information processing terminal, including: display processing means for displaying on a display unit a first image, which corresponds to an application program, and a second image that is transmissive; and a control unit for giving an instruction to the application program based on input operation that is performed on the first image displayed on the display unit, in which the control unit is configured to: disable when the first image is displayed in a given area that is taken up by the second image, input operation that is performed on the first image; and change the given area in response to input operation that is performed on the second image.

Another aspect of this invention related to a screen control method for an information processing terminal, including: displaying a first image, which corresponds to an application program, and a second image that is transmissive; giving an instruction to the application program based on input operation that is performed on the displayed first image; disabling input operation that is performed on the first image when the first image is displayed in a given area that is taken up by the second image; and changing the given area in response to input operation that is performed on the second image.

A further another aspect of this invention relates to a screen control program for causing an information processing terminal to carry out the processing of: displaying on a display unit a first image, which corresponds to an application program, and a second image that is transmissive; giving an instruction to the application program based on input operation that is performed on the first image displayed on the display unit, disabling input operation that is performed on the first image when the first image is displayed in a given area that is taken up by the second image; and changing the given area in response to input operation that is performed on the second image.

### Effect of the Invention

According to the aspects of this invention, where the use of the translucent image allows a user to visually recognize what is displayed on the display screen, desired operation can be performed with accuracy and the user is saved from unlocking a screen lock each and every time.

Further advantages and embodiments of this invention are described in detail below with reference to the drawings.

### Brief Description of the Drawing

Fig. 1 is a diagram for illustrating the appearance of an information processing terminal according to a first embodiment of this invention.
Fig. 2 is a function block diagram for illustrating the schematic configuration of the information processing terminal of Fig. 1.
Fig. 3 is a flow chart for illustrating screen operation processing of the information processing terminal of Fig. 1.
Fig. 4 includes (a) to (c) which are diagrams for illustrating a display screen of the information processing terminal according to the first embodiment of this invention.
Fig. 5 includes (a) to (c) which are diagrams for illustrating an example of a display screen of an information processing terminal according to a second embodiment of this invention.
Fig. 6 includes (a) to (c) which are diagrams for illustrating an example of the display screen of the information processing terminal according to the second embodiment of this invention.
Fig. 7 includes (a) and (b) which are diagrams for illustrating an example of the display screen of the information processing terminal according to the second embodiment of this invention.
Fig. 8 includes (a) to (d) which are diagrams for illustrating an example of the display screen of the information processing terminal according to the second embodiment of this invention.
Fig. 9 includes (a) to (c) which are diagrams for illustrating an example of a display screen of an information processing terminal according to a third embodiment of this invention.
Fig. 10 includes (a) to (d) which are diagrams for illustrating an example of the display screen of the information processing terminal according to the third embodiment of this invention.
Fig. 11 includes (a) to (c) which are diagrams for illustrating an example of the display screen of the information processing terminal according to the third embodiment of this invention.
Fig. 12 is a diagram for illustrating the appearance of an information processing terminal according to a fourth embodiment of this invention.
Fig. 13 includes (a) to (d) which are each a diagram for illustrating an example of a display screen of the information processing terminal according to the fourth embodiment of this invention.

### Modes for Embodying the Invention

Embodiments of this invention are described below with reference to the drawings. However, the embodiments described below are not to limit the interpretation of the technical scope of this invention in any way.

### (First Embodiment)

A first embodiment of this invention is described first.

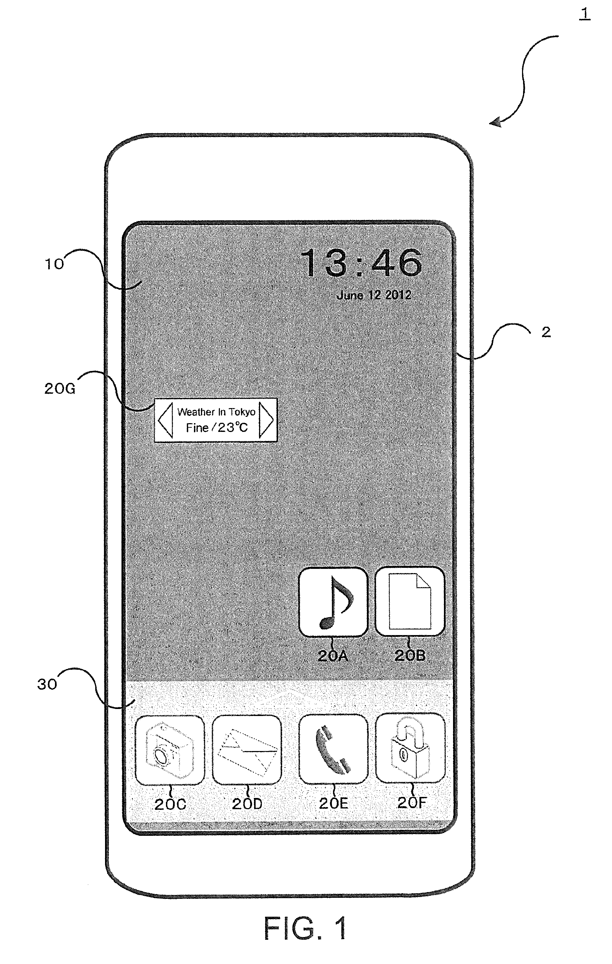

Fig. 1 is a diagram for illustrating an overview of an information processing terminal 1 according to the first embodiment of this invention. As illustrated in Fig. 1, a touch panel 2 is mounted on the information processing terminal 1 according to this embodiment. A display screen 10 displayed on the touch panel 2 displays a plurality of icon images (first images), here, 20A to 20G, and an erroneous operation preventing image (a second image) 30. The information processing terminal 1 according to this embodiment performs various types of processing such as communication processing, Web browsing, movie viewing/music listening, the activation of applications, or voice communication.

Examples of the information processing terminal 1 include smartphones such as MEDIUS (a trademark), tablet terminals such as MEDIUS TAB (a trademark), notebook computers, PDAs, gaming machines, digital cameras, television sets, and other electronic devices. The information processing terminal 1 can be any electronic device on which a touch panel is mounted and to which an erroneous operation preventing technology needs to be applied.

In this embodiment, "tap" means the operation of lightly touching a spot on the display screen 10 with a fingertip or the tip of a pen. "Hover" means the operation of placing a fingertip or the tip of a pen in a place that is distanced from the display screen 10 by a given gap. "Flick" means the operation of touching a spot on the display screen 10 with a fingertip or the tip of a pen and quickly sweeping the display screen 10 thereafter. "Double tap" means the operation of touching a spot on the display screen 10 of the information processing terminal 1 twice in quick succession. "Input operation" mentioned below includes those types of operation. The same applies to the subsequent embodiments.

Components of the information processing terminal 1 according to this embodiment are described below in detail with reference to Figs. 1 to 4.

The touch panel 2 is mounted on the information processing terminal 1 to detect a contact between, for example, one or more fingers and the touch panel 2 by a capacitive method, which involves detecting a change in electrostatic capacitance between electrodes that is caused by the approaching of an object such as a fingertip or the tip of a pen to the panel surface. The touch panel 2 detects, for example, input operation such as tap, hover, flick, and double tap. The touch panel 2 is not limited to the detection method described above, and may instead use a resistive method, a surface acoustic wave method, an infrared method, an electromagnetic induction method, or the like.

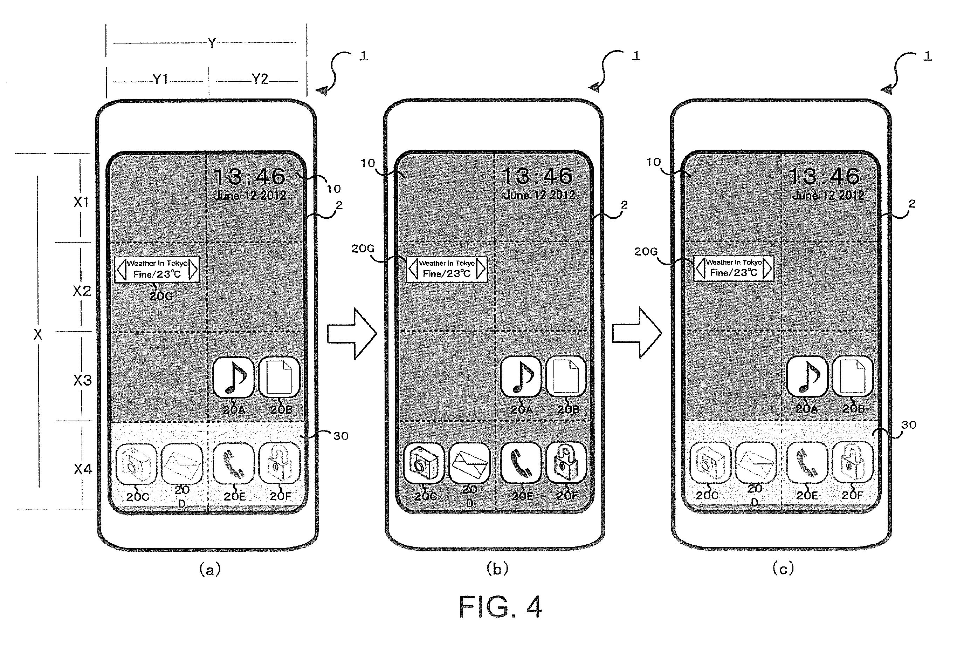

The display screen 10 displays various types of information when the information processing terminal 1 is in use. The display screen 10 in Fig. 1 displays an initial screen (a home screen) to display information such as time, date, the day of the week, and the plurality of icon images, 20A to 20G. The initial screen is the display screen 10 that is displayed when the information processing terminal 1 returns from a sleep mode or when the information processing terminal 1 is powered on. In this embodiment, the screen area of the display screen 10 has a longer side, which is denoted by X (rows), and a shorter side, which is denoted by Y (columns), as illustrated in Fig. 4, for the convenience of description. Sections that are obtained by dividing the longer side (rows) and sections that are obtained by dividing the shorter side (columns) are denoted by X1 to X4 and Y1 and Y2 in the following description.

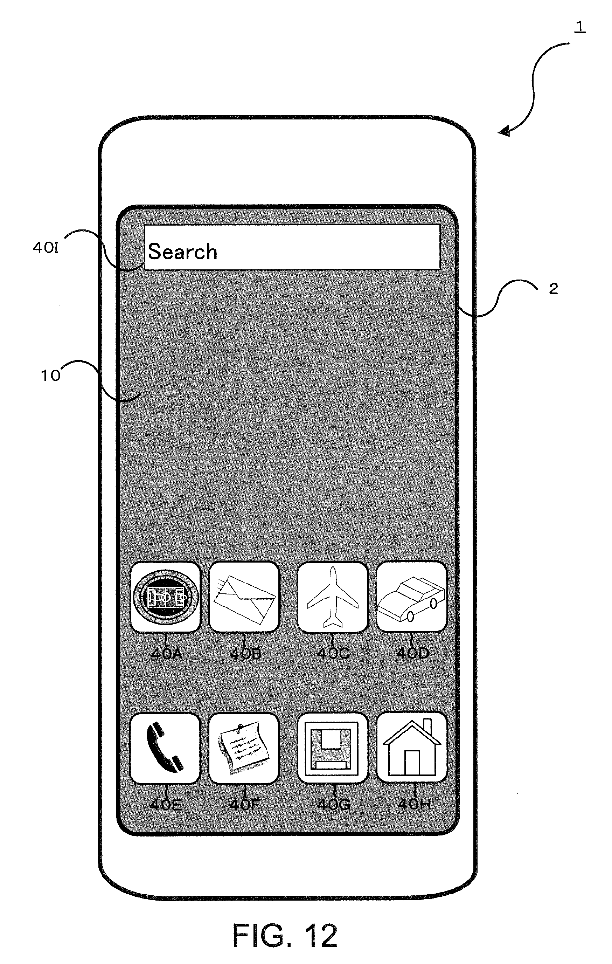

The icon images 20A to 20G (hereinafter may collectively be referred to as icon images 20) each correspond to an application program (app), and tapping, for example, the icon images 20 activates corresponding functions. In the display screen 10 of Fig. 1, the icon images 20A to 20G represent a music app, a document app, a camera app, a mail app, a phone call app, a screen lock unlocking app, and a weather app, respectively. When the icon image 20A is operated to activate the music app, for example, a music player is called up, thereby enabling a user to listen to music, purchase music, and the like. When the icon image 20F is operated to activate the screen lock unlocking app, a screen lock on the information processing terminal 1 is unlocked and the display screen 10 of Fig. 12, which is described later, is displayed. When the icon image 20G is operated to activate the weather app, the weather and the temperature in a particular region are displayed, and the weather and the temperature in another region can be displayed by tapping a left or right cursor.

The erroneous operation preventing image 30 displayed on the display screen 10 is transmissive and can be adjusted in transmittance via a settings menu. The erroneous operation preventing image 30 is disposed so as to be superimposed on the icon images 20, and disables the user's input operation performed on the icon images 20 that are covered with the erroneous operation preventing image 30. The erroneous operation preventing image 30, which is transmissive, allows the icon images 20 to be visually recognizable through the erroneous operation preventing image 30. Instruction information, which is an instruction to the user, can be displayed in the erroneous operation preventing image 30, and operation processing based on the instruction information is executed by the user's input operation. The erroneous operation preventing image 30 can have other shapes than the rectangular shape illustrated in the drawings, for example, a polygonal shape or a circular shape.

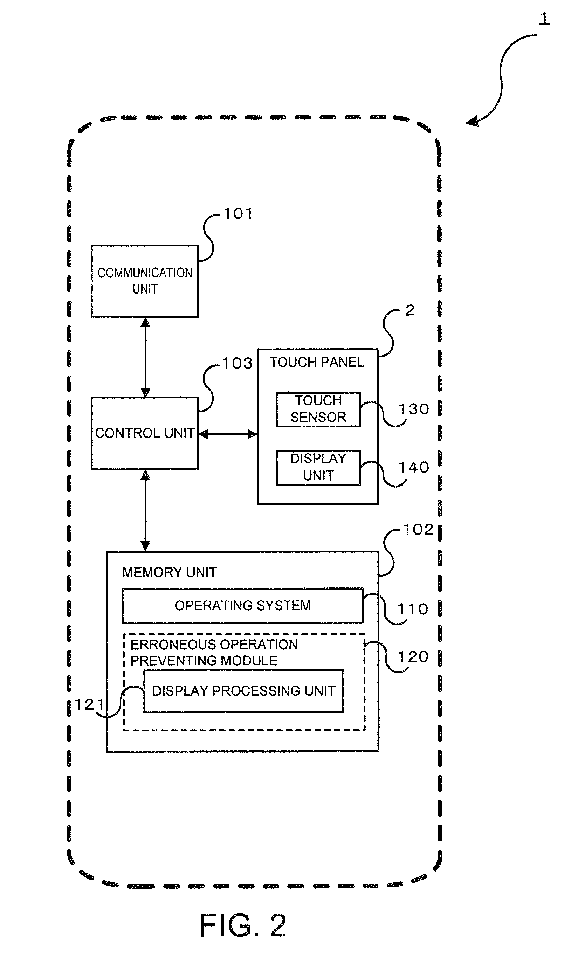

Fig. 2 is a function block diagram for illustrating the schematic configuration of the information processing terminal 1 according to this embodiment. Referring to Fig. 2, the information processing terminal 1 includes the touch panel 2, a communication unit 101, a memory unit 102, and a control unit 103. While components are grouped into function blocks in Fig. 2 for the convenience of description, the components may be implemented by software in practice.

The communication unit 101 transmits and receives data to and from a base station and a server. For example, the communication unit 101 allows the user to make a phone call to another portable terminal from the information processing terminal 1, to browse the Web on the information processing terminal 1, and to transmit and receive email using the information processing terminal 1.

The memory unit 102 includes an operating system 110 and an erroneous operation preventing module 120, and is a medium such as a RAM or a ROM that stores various programs prescribing the operation of the control unit 103 and various types of data processed by the information processing terminal 1. The memory unit 102 also stores application programs that can be downloaded from Websites. The operating system 101 can be the Android (a trademark) OS.

The erroneous operation preventing module 120 includes a display processing unit 121, and provides various types of information for displaying the icon images 20 and the erroneous operation preventing image 30 on the display screen 10 to the control unit 103. The control unit 103 includes a central processing unit (CPU) built in the information processing terminal 1, and controls the operation of each unit in the information processing terminal 1. The control unit 103 controls the operation of each unit by reading various programs that are stored in the memory unit 102, and computing following various commands of the programs.

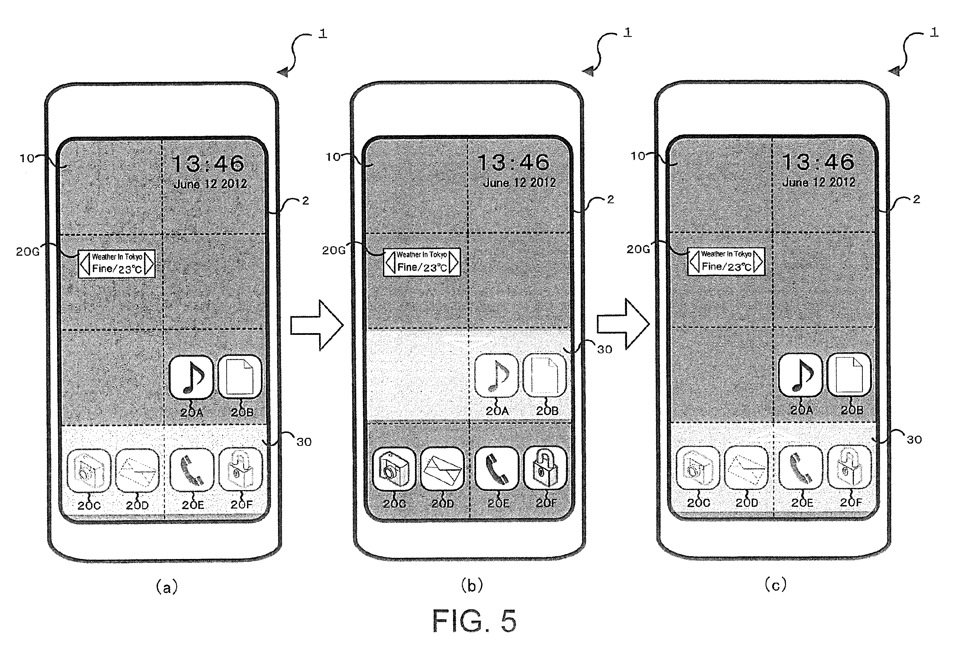

The display processing unit 121 displays on the display screen 10 the icon images 20, which correspond to application programs, and the erroneous operation preventing image 30, which is transmissive. When the erroneous operation preventing image 30 is displayed in a given area that is taken up by some icon images 20, the control unit 103 disables the user's input operation performed on the icon images 20. For example, the control unit 103 disables input operation performed on the icon images 20C, 20D, 20E, and 20F, which are displayed in the same area as a screen area (X4, Y) where the erroneous operation preventing image 30 is displayed as illustrated in Fig. 5(a).

The control unit 103 changes the placement of a given area in response to the user's input operation performed on the erroneous operation preventing image 30. For example, referring to Fig. 5, when the user performs input operation on the erroneous operation preventing image 30 on the display screen 10 of Fig. 5(a), the control unit 103 changes the given area for the erroneous operation preventing image 30 from an image area (X4, Y) to an image area (X3, Y), thereby changing the display screen 10 to that of Fig. 5(b). When detecting the user's input operation that is performed on a display unit, the control unit 103 determines whether or not a point where the input operation is received is a point where one of the icon images 20 is displayed or within the display area of the erroneous operation preventing image. When detecting that the user's input operation is performed on one of the icon images 20 that are displayed within the given area that is taken up by the erroneous operation preventing image 30, the control unit 103 does not issue an instruction to an application program that corresponds to the icon image 20. Accordingly, erroneous operation is prevented in a screen area taken up by the erroneous operation preventing image 30 even when the user of the information processing terminal 1 erroneously touches the display screen 10.

The control unit 103 further changes a place in the display unit where the given area is displayed, based on input operation performed on the erroneous operation preventing image 30, and disables input operation performed on the icon images 20 that overlap with the changed given area. For example, in the case where the given area for the erroneous operation preventing image 30 is changed from the image area (X4, Y) to the image area (X3, Y) as illustrated in Fig. 5(b), the user's input operation performed on the icon images 20A and 20B, which are in the image area (X3, Y), is disabled after the change.

The touch panel 2 incorporated in the information processing terminal 1 as a part of a user interface is implemented by, for example, a liquid crystal display (LCD). The touch panel 2 includes a touch sensor 130 for sensing input operation and a display unit 140 for displaying various types of information to the user. The touch sensor 130 and the display unit 140 may be configured as separate parts, or may be configured unitarily with a display panel such as a liquid crystal panel with a built-in optical sensor.

Screen control processing of the display screen 10 in the information processing terminal 1 is described next with reference to a flow chart.

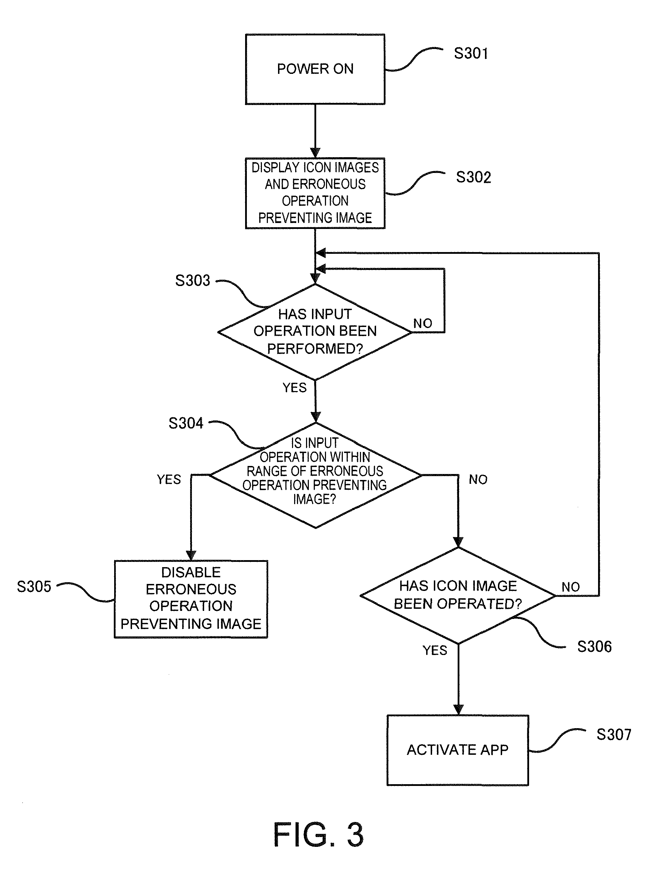

Fig. 3 is a flow chart for illustrating an image control operation of the information processing terminal I according to this embodiment. When the information processing terminal 1 is powered on (S301), the display processing unit 121 displays the icon images 20 and the erroneous operation preventing image 30 on the display screen 10 of the information processing terminal 1 (S302). The touch sensor 130 next detects the user's input operation performed on the display screen 10 (S303). In the case where the user's input operation is determined by the control unit 103 as operation inside the range of the erroneous operation preventing image 30 (S304: YES), the control unit 103 disables and moves the erroneous operation preventing image 30 within the display screen 10 (S305). In the case where the user's input operation is determined by the control unit 103 as operation outside the range of the erroneous operation preventing image 30 (S304: NO), the control unit 103 subsequently determines whether the user's input operation has been performed on one of the icon images 20 (S306). When it is determined that the input operation is not operation performed on one of the icon images 20, the processing returns to the detection of input operation (S306: NO). When it is determined that the input operation has been performed on one of the icon images 20 (S306: YES), the control unit 103 activates an app that corresponds to the icon image 20 (S307).

Fig. 4 shows diagrams for illustrating transitions in the state of the display screen 10 that are caused by the user's input operation in the information processing terminal 1 according to this embodiment. First, the erroneous operation preventing image 30 is located in the screen area (X4, Y) of the display screen 10 in Fig. 4(a). Next, the user performs input operation on the erroneous operation preventing image 30, and the erroneous operation preventing image 30 consequently fades out of the display screen 10 or slides downward. Fig. 4(b) is an illustration of the state of the display screen 10 after Fig. 4(a) where the erroneous operation preventing screen 30 has been disabled. In this state, the icon image 20F is tapped in order to unlock the screen lock. In the case where a tap or hover is performed on, for example, the icon image 20C in this state, the camera application is activated. After the passage of a certain period of time, the display screen 10 returns to a state illustrated in Fig. 4(c). In Fig. 4(c), the erroneous operation preventing image 30 is displayed in the screen area (X4, Y) to prevent erroneous operation such as unintended input operation in the screen area (X4, Y).

Even in the state of Fig. 4(a) where erroneous operation preventing image 30 is located in the given screen area (X4, Y) of the display screen 10, the music player, for example, can be activated by performing a tap or hover on the icon image 20A. In other words, a screen area in which input operation performed on the icon images 20 is enabled and a screen area in which input operation performed on the icon images 20 is disabled can be set separately in this embodiment. The icon image 20 of an app that is to be activated immediately is therefore placed outside the range of the erroneous operation preventing image 30. The icon image 20 that is intolerant of erroneous operation, on the other hand, is placed inside the erroneous operation preventing image 30. Alternatively, the icon images 20 may be arranged first, with the erroneous operation preventing image 30 placed in a desired screen area later.

The first embodiment of this invention described above has the following effects:
A first effect is that the icon images 20 are recognizable even in the erroneous operation preventing state. This is because the erroneous operation preventing image 30 is transmissive.
A second effect is that application programs can be activated quickly while erroneous operation is prevented. This is because the icon image 20 of an app to be activated immediately and the icon image 20 in the erroneous operation preventing state can easily be distinguished by sight from each other, and the icon image 20 that does not need erroneous operation prevention is not placed under the erroneous operation preventing image 30.
A third effect is that the activation of an application program is fast. This is because the erroneous operation preventing image 30 can be erased by simple input operation such as a tap or hover.

### (Second Embodiment)

Now, a second embodiment of this invention is described. The second embodiment of this invention is a modification example of the first embodiment described above. In this embodiment, components whose functions are similar to the ones described in the first embodiment are denoted by the same reference symbols and descriptions thereof are omitted.

Figs. 5 to 8 are diagrams for illustrating the display screen 10 of the information processing terminal 1 according to the second embodiment of this invention. Those diagrams represent transitions in the state of the display screen 10 that are caused by the user's input operation.

First, the erroneous operation preventing image 30 is located in the screen area (X4, Y) of the display screen 10 in Fig. 5(a). Next, the user performs input operation on the erroneous operation preventing image 30, and the erroneous operation preventing image 30 consequently slides upward on the display screen 10. Fig. 5(b) is an illustration of the state of the display screen 10 after the stage of Fig. 5(a), where the erroneous operation preventing image 30 has been moved to the screen area (X3, Y). In this state, erroneous operation of the icon images 20A and 20B is prevented, whereas erroneous operation prevention is now disabled for the icon images 20C, 20D, 20E, and 20F. Accordingly, in the state of the display screen 10 of Fig. 5(b), input operation performed on the icon images 20A and 20B is disabled and input operation performed on the icon images 20C, 20D, 20E, 20F, and 20G is enabled. When the user newly performs input operation on the erroneous operation preventing image 30 or a certain period of time passes on the display screen 10 of Fig. 5(b), the erroneous operation preventing image 30 returns to the original screen area (X4, Y).

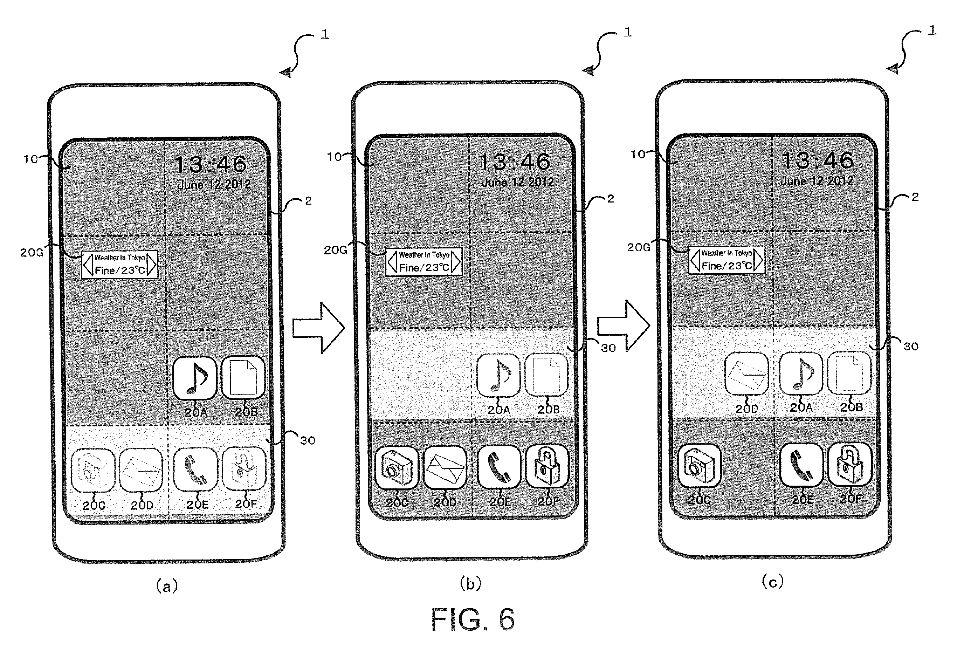

Fig. 6 shows a modification example of the transitions in the state of the display screen that are illustrated in Fig. 5. The display screen 10 in Fig. 6(a) and Fig. 6(b) is the same as the display screen 10 in Fig. 5(a) and Fig. 5(b), and descriptions thereof are therefore omitted here.

Fig. 6(c) is an example of the state of the display screen 10 after the state of Fig. 6(b), where the icon image 20D has been moved by dragging to the screen area (X3, Y). In Fig. 6(c), the erroneous operation preventing image 30 remains in the screen area (X3, Y) of the display screen 10. In this manner, the icon image 20 of which erroneous operation is to be prevented can be selected individually by moving the icon image 20 to an area where the erroneous operation preventing image 30 is located, instead of moving the erroneous operation preventing image 30 by tapping or otherwise operating the erroneous operation preventing image 30.

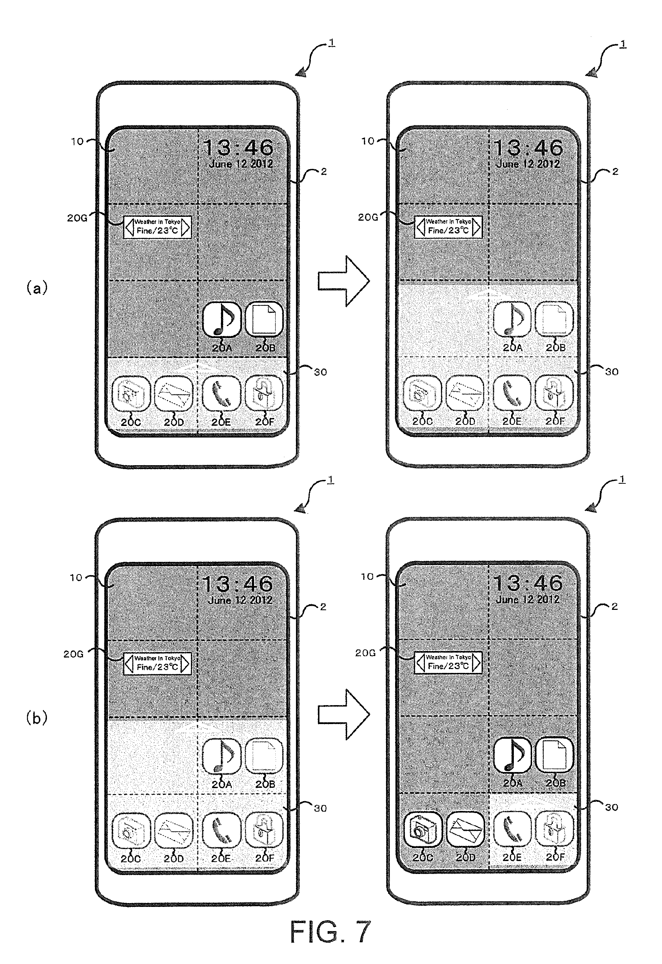

Fig. 7 shows diagrams for illustrating another example of the image control processing on the display screen 10 of the information processing terminal 1. In Fig. 7(a), the erroneous operation preventing image 30 on the display screen 10 is pinched out to expand the erroneous operation preventing image 30 from the screen area (X4, Y) to a screen area (X3-X4, Y). In Fig. 7(b), the erroneous operation preventing image 30 on the display screen 10 is pinched in to reduce the erroneous operation preventing image 30 from the screen area (X3-X4, Y) to a screen area (X4-X4, Y2). In this manner, a range in which erroneous operation is to be prevented and a range in which erroneous operation prevention is not set and the icon image 20 of an app to be activated immediately and the like are placed can be set in the display screen 10 by expanding/reducing the erroneous operation preventing image 30 freely.

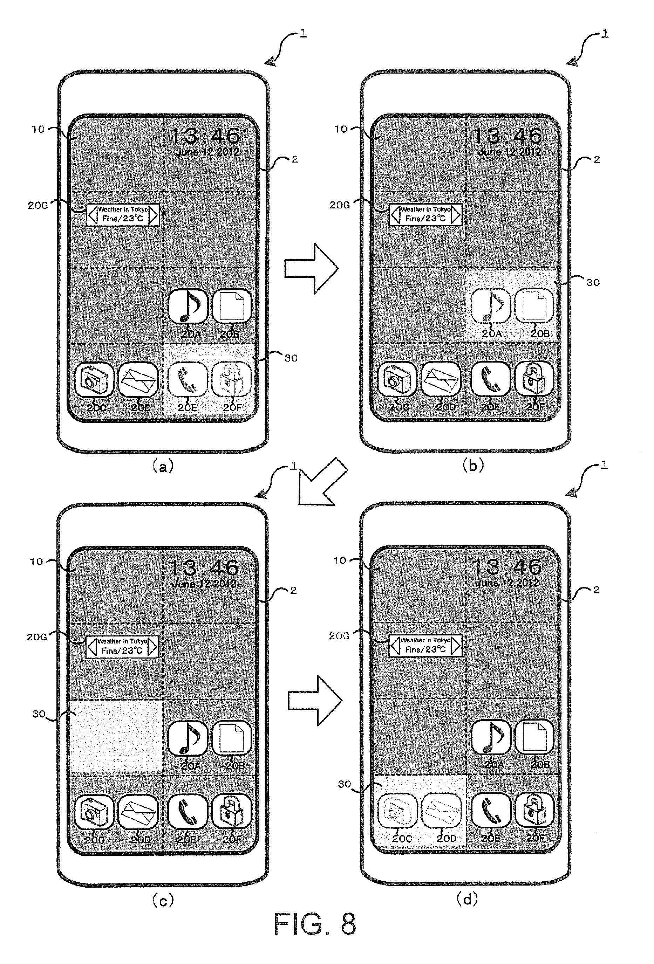

Fig. 8 shows diagrams for illustrating another example of the image control processing according to this embodiment. Fig. 8(a) is an illustration of the information processing terminal 1 in which the erroneous operation preventing image 30 is located in a screen area (X4, Y2) of the display screen 10. When input operation is performed on the erroneous operation preventing image 30 on the display screen 10 in the state of Fig. 8(a), the erroneous operation preventing image 30 moves upward and the display screen 10 shifts to the state of Fig. 8(b). In Fig. 8(b), the erroneous operation preventing image 30 is located in a screen area (X3, Y2) of the display screen 10. When input operation is next performed on the erroneous operation preventing image 30 on the display screen 10 in the state of Fig. 8(b), the erroneous operation preventing image 30 moves leftward and the display screen 10 shifts to the state of Fig. 8(c). In Fig. 8(c), the erroneous operation preventing image 30 is located in a screen area (X3, Y1) of the display screen 10. When input operation is performed on the erroneous operation preventing image 30 on the display screen 10 in the state of Fig. 8(c), the erroneous operation preventing image 30 moves downward and the display screen 10 shifts to the state of Fig. 8(d). In Fig. 8(d), the erroneous operation preventing image 30 is located in a screen area (X4, Y1) of the display screen 10. In short, the erroneous operation preventing image 30 can be moved upward, downward, leftward, and rightward.

The processing of moving the erroneous operation preventing image 30 is not limited to the examples given above. For instance, the erroneous operation preventing image 30 may be moved in an oblique direction, or may be moved from the screen area (X4, Y1) to a screen area (X2, Y1) by flicking the erroneous operation preventing image 30 and skipping one row, may be moved from the screen area (X4, Y1) to a screen area (X1, Y1) by skipping two rows.

In addition to setting the size of the erroneous operation preventing image 30 by the pinch-out operation and pinch-in operation described above, the erroneous operation preventing image 30 can be expanded and reduced via the settings menu. The erroneous operation preventing image 30 can also be removed and relocated at the user's discretion. Those processing procedures are instructed by the control unit 103 based on the user's input operation.

As described above, according to this embodiment, the erroneous operation preventing image 30 is disabled by input operation and moved to another area of the display screen 10 that is not the given area, and input operation is performed on the erroneous operation preventing image 30 again at that point, to thereby superimpose the erroneous operation preventing image 30 on the icon image 20 for which erroneous operation prevention has been disabled. The user can thus easily recognize which icon image 20 is disabled.

When the erroneous operation preventing image 30 is moved by input operation to the other area of the display screen 10 that is not the given area, the icon image 20 for which erroneous operation prevention has been disabled is also moved to the other area where the erroneous operation preventing image 30 has been moved, to thereby set erroneous operation prevention to the icon image 20.

The second embodiment of this invention has, in addition to the first to third effects of the first embodiment of this invention described above, the following effects:
A fourth effect is that an icon image can be put back into an erroneous operation preventing state by simple input operation after erroneous operation prevention is disabled. This is because the erroneous operation preventing image can be moved freely in the display screen.
A fifth effect is that the level of erroneous operation prevention can be adjusted. This is because the area of the erroneous operation preventing image can be expanded and reduced.

### (Third Embodiment)

Now, a third embodiment of this invention is described. The third embodiment of this invention is a modification example of the first and second embodiments described above. In this embodiment, components whose functions are similar to the ones described in the first and second embodiments are denoted by the same reference symbols and descriptions thereof are omitted.

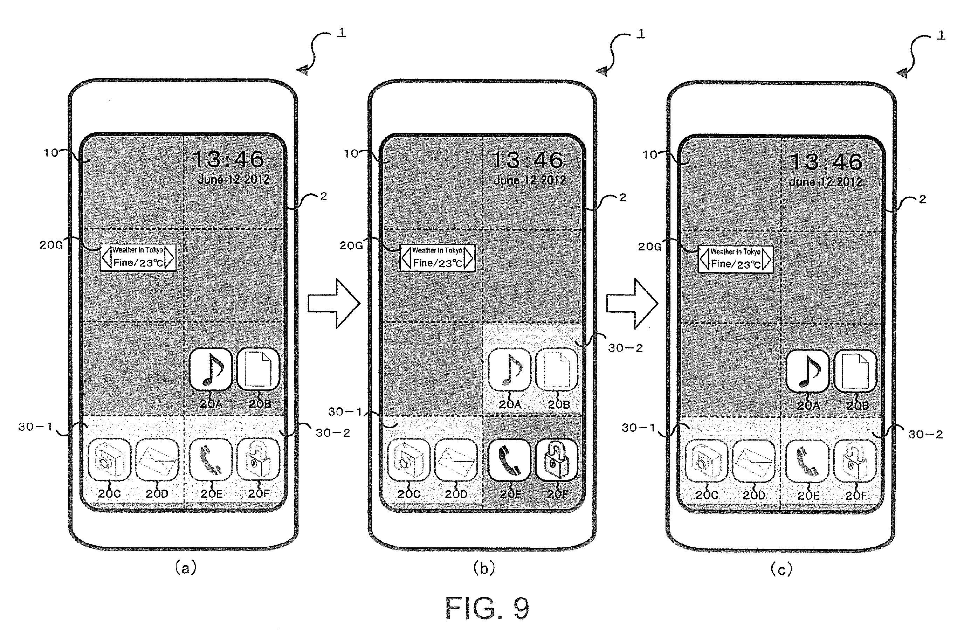

Figs. 9 to 11 are diagrams for illustrating the display screen 10 of the information processing terminal 1 according to the third embodiment of this invention. Those diagrams represent transitions in the state of the display screen 10 that are caused by the user's input operation. In Fig. 9, two erroneous operation preventing images 30-1 and 30-2 are arranged in the display screen 10.

In Fig. 9(a), the erroneous operation preventing image 30-1 is located in the screen area (X4, Y1) of the display screen 10, and the erroneous operation preventing image 30-2 is located in the screen area (X4, Y2) of the display screen 10. When the user performs input operation such as a tap or hover on the erroneous operation preventing image 30-2 on this display screen 10, the erroneous operation preventing image 30-2 moves upward and the display screen 10 shifts to the state of Fig. 9(b). In Fig. 9(b), the erroneous operation preventing image 30-1 is still located in the screen area (X4, Y1), and the moved erroneous operation preventing image 30-2 is located in the screen area (X3, Y2) of the display screen 10. In this state, erroneous operation of the icon images 20A and 20B, which are in the screen area (X3, Y2) is prevented, and erroneous operation prevention is disabled for the icon images 20E and 20F. When input operation is performed again on the moved erroneous operation preventing image 30-2, the display screen 10 shifts to the state of Fig. 9(c). In Fig. 9(c), the erroneous operation preventing image 30-1 is located in the screen area (X4, Y1) of the display screen 10, and the erroneous operation preventing image 30-2 has moved from the screen area (X3, Y2) of the display screen 10 to the screen area (X4, Y2).

A plurality of erroneous operation preventing images, here, 30-1 and 30-2, are arranged on the display screen 10, and erroneous operation prevention can thus be set and disabled for each erroneous operation preventing image separately. This can be set via, for example, the settings menu. According to this example, the prevention of erroneous operation of the icon images 20 can be set in fine units.

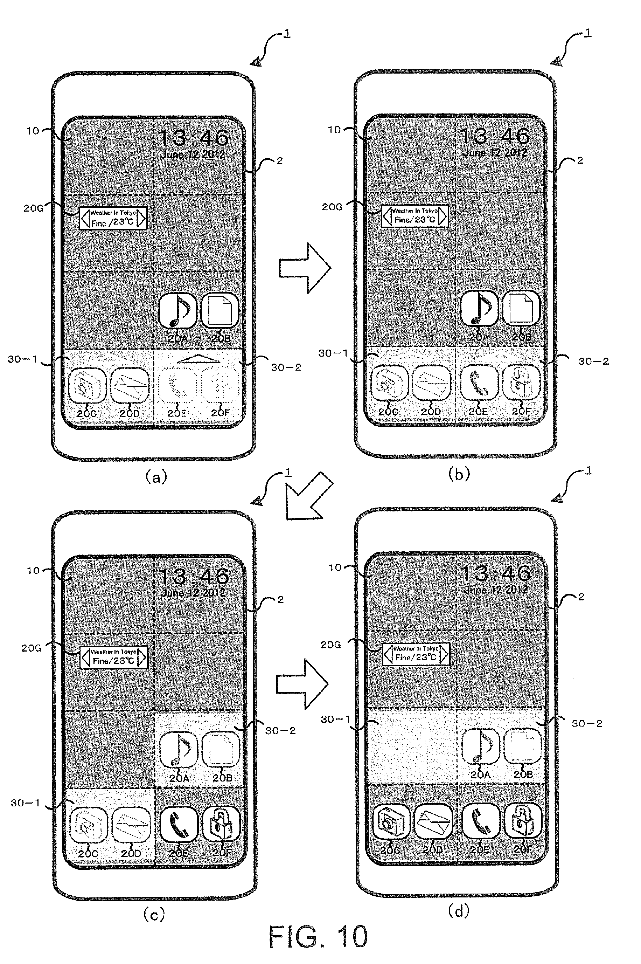

Fig. 10 has two erroneous operation preventing images 30-1 and 30-2 as in Fig. 9. In the example of Fig. 10, the erroneous operation preventing images 30-1 and 30-2 are each set a different security level (erroneous operation prevention level). To describe in more detail, in Fig. 10(a), the erroneous operation preventing image 30-1 is located in the screen area (X4, Y1) of the display screen 10, and the erroneous operation preventing image 30-2 to which a higher erroneous operation prevention level than that of the erroneous operation preventing image 30-1 is set is located in the screen area (X4, Y2) of the display screen 10. The difference in erroneous operation prevention level can be expressed in a visible manner by a difference in transmittance or the like between the erroneous operation preventing images 30-1 and 30-2 as can be seen in Fig. 10(a). In this example, the erroneous operation preventing image 30-2 is lower in transmittance than the erroneous operation preventing image 30-1, and the icon images 20E and 20F are consequently expressed in a color lighter than the color used for the icon images 20C and 20D.

In Fig. 10(a), the erroneous operation preventing image 30-1 is located in the screen area (X4, Y1) of the display screen 10, and the erroneous operation preventing image 30-2, which is higher in erroneous operation prevention level than the erroneous operation preventing image 30-1, is located in the screen area (X4, Y2) of the display screen 10. When the user performs input operation such as a tap or hover on the erroneous operation preventing image 30-2 on this display screen 10, the transmittance of the erroneous operation preventing image 30-2 changes so that the icon images 20E and 20F covered with the erroneous operation preventing image 30-2 are more visible. The user can thus visually recognize that, by tapping once, erroneous operation prevention is set to be one level less strict. Fig. 10(b) is an illustration of the display screen 10 where the erroneous operation preventing image 30-2 has been tapped once. While the erroneous operation preventing image 30-2 changes in transmittance in this example, the location of the erroneous operation preventing image 30-2 remains in the screen area (X4, Y2). When the user subsequently performs input operation such as a tap or hover on the erroneous operation preventing image 30-2 again, erroneous operation prevention is set to be two levels less strict, the erroneous operation preventing image 30-2 moves upward, and the display screen 10 shifts to the state of Fig. 10(c).

In Fig. 10(c), the erroneous operation preventing image 30-1 is still located in the screen area (X4, Y1) of the display screen 10, and the moved erroneous operation preventing image 30-2 is located in the screen area (X3, Y2) of the display screen 10. When the user performs input operation on the erroneous operation preventing image 30-1 on the screen display 10 that is in the state of Fig. 10(c), the erroneous operation preventing image 30-1 moves upward and the display screen 10 shifts to the state of Fig. 10(d). In Fig. 10(d), it can be seen that the erroneous operation preventing image 30-1 is located in the screen area (X3, Y1) of the display screen 10, and the erroneous operation preventing image 30-2 is in the screen area (X3, Y2) of the display screen 10.

In the example of Fig. 10, an arbitrary erroneous operation prevention level can thus be set to each of the erroneous operation preventing images 30-1 and 30-2 separately. The erroneous operation prevention of the erroneous operation preventing image 30-2, which is higher in erroneous operation prevention level, is disabled in stages, and erroneous operation is therefore prevented even when the user erroneously taps the display screen 10 several times. While setting two levels of erroneous operation prevention is described in this example, the third embodiment is not limited thereto, and three levels, four levels, or more levels of erroneous operation prevention can be set depending on the importance of erroneous operation prevention. Instead of changing the transmittance, the color of the erroneous operation preventing images 30-1 and 30-2 may be changed from red to blue to yellow, for example.

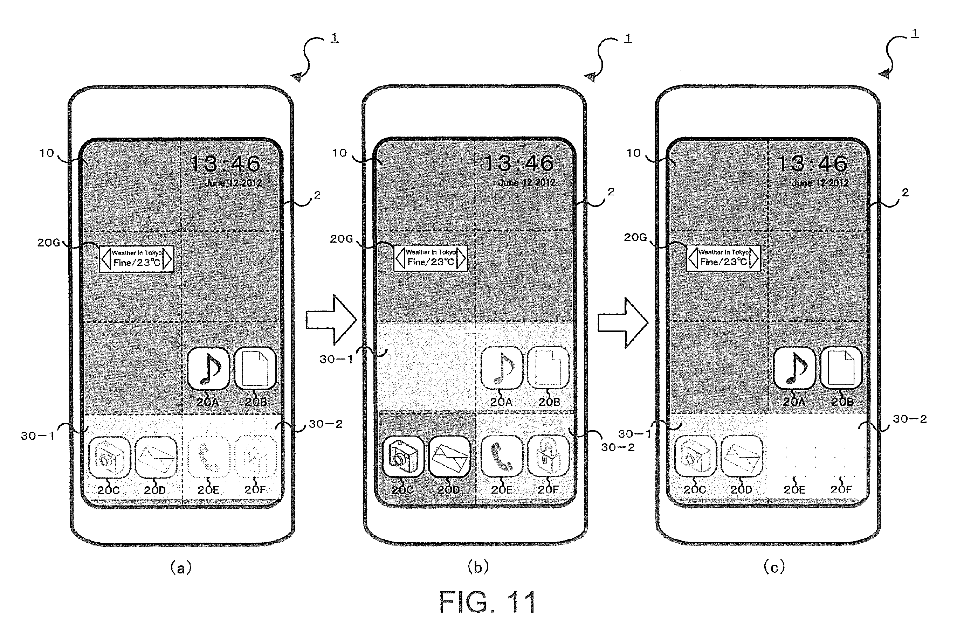

The display screen 10 of Fig. 11 has two erroneous operation preventing images 30-1 and 30-2, which are disposed so as to partially overlap with each other. In Fig. 11(a), where the erroneous operation preventing image 30-1 is in the screen area (X4, Y) of the display screen 10 and the erroneous operation preventing image 30-2 is in the screen area (X4, Y2) of the display screen 10, the two erroneous operation preventing images 30-1 and 30-2 overlap with each other in the screen area (X4, Y2). It is therefore considered that double erroneous operation prevention settings are set to the icon images 20E and 20F, which are placed in the screen area (X4, Y2). When the user performs input operation such as a tap or hover on the erroneous operation preventing image 30-1 on the display screen 10 of Fig. 11(a), the erroneous operation preventing image 30-1 moves upward and the display screen 10 shifts to the state of Fig. 11(b). In Fig. 11(b), the erroneous operation preventing image 30-1 is located in the screen area (X3, Y) of the display screen 10, and the erroneous operation preventing image 30-2 is in the screen area (X4, Y2) of the display screen 10. When input operation is performed again on the moved erroneous operation preventing image 30-1, the display screen 10 shifts to the state of Fig. 11(c). In Fig. 11(c), the erroneous operation preventing image 30-1 returns to the screen area (X4, Y) of the display screen 10 and the erroneous operation preventing image 30-2 stays in the screen area (X4, Y2) of the display screen 10.

In the embodiment illustrated in Figs. 9 to 11, the erroneous operation prevention level can be varied from one particular icon image 20 to another by varying the number of erroneous operation preventing images 30 or the number of erroneous operation preventing images 30 that overlap with one another, or by setting via the settings menu so that erroneous operation prevention is disabled in stages through changes in the transmittance of the erroneous operation preventing image 30.

The third embodiment of this invention has, in addition to the first to fifth effects of the first and second embodiments of this invention described above, the following effects:
A sixth effect is that enabling input operation for a necessary icon image alone is possible. This is because finely set erroneous operation preventing images can be set individually.
A seventh effect is that the erroneous operation prevention level can be adjusted on an icon image-by-icon image basis. This is because an icon image for which erroneous operation prevention is indispensable can be set so that double or triple unlocking operation is required, or can be adjusted in the transmittance of the erroneous operation preventing image.
An eighth effect is that the erroneous operation preventing image 30 can be applied posteriorly to the existing information processing terminal 1 by setting simple operation settings. This is because a program for the erroneous operation preventing image 30 can be downloaded from a special Web site to be set as seen fit.

### (Fourth Embodiment)

Now, a fourth embodiment of this invention is described. The fourth embodiment of this invention is a modification example of the first embodiment, second embodiment, and third embodiment described above. In this embodiment, components whose functions are similar to the ones described in the first embodiment, the second embodiment, and the third embodiment are denoted by the same reference symbols and descriptions thereof are omitted.

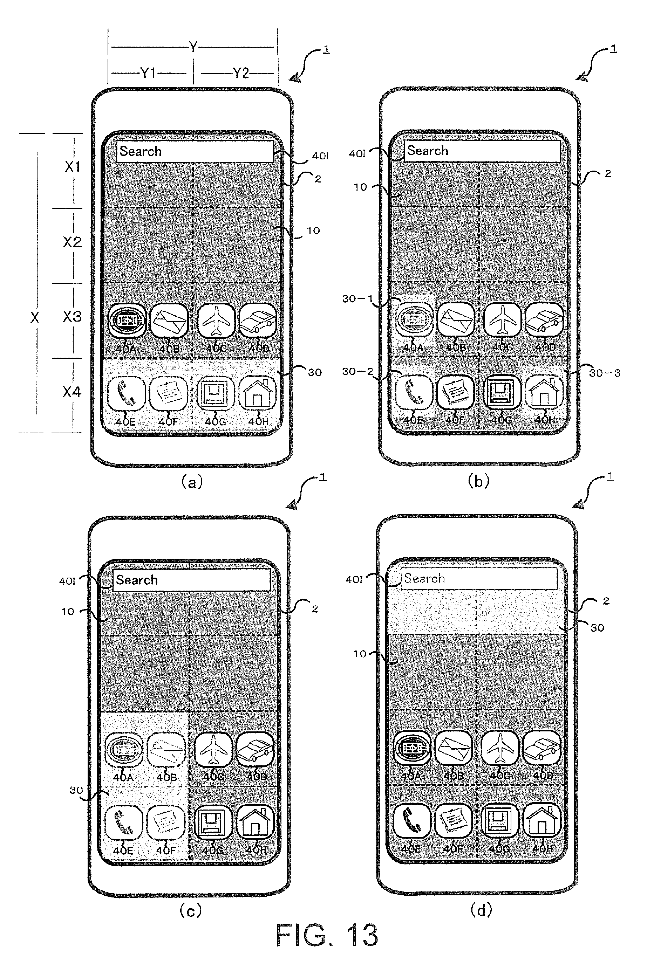

Figs. 12 and 13 are diagrams for illustrating the display screen 10 of the information processing terminal 1 according to the fourth embodiment of this invention.

The display screen 10 of Fig. 12 is displayed after the icon image 20F is selected on the display screen 10 of Fig. 1 or other drawings and the screen lock is unlocked. On this display screen 10, the user can select from a plurality of icon images, here, 40A to 40I, so that various functions that the user desires are implemented. The icon images 40A to 40I in the display screen 10 of Fig. 12 represent a game app, a mail app, a transport operation information app, a traffic information app, a phone call app, a memo app, a saving app, a home app, and a search app, respectively.

When the icon image 40A is operated to activate the game app, for example, the user can download a game from a particular Web site to enjoy a shooting game, a role playing game, or the like. When the icon image 40B is operated to activate the mail app, the viewing of transmitted/received mail and other types of mail-related processing can be executed. When the icon image 40H is operated to activate the home app, a function of returning to the initial screen illustrated in Fig. 1 or other drawings is executed. In the case where the user selects the icon image 40I, which represents the search app, inputs a search word, and executes a search, results of the search are displayed.

Fig. 13(a) to Fig. 13(d) are each a diagram for illustrating an example of the placement of the erroneous operation preventing image 30 on the display screen 10 of the information processing terminal 1 according to this embodiment. The erroneous operation preventing image 30 is placed in the screen area (X4, Y) of the display screen 10 in Fig. 13(a). In this state, input operation performed on the icon images 40E, 40F, 40G, and 40H is disabled, whereas input operation performed on the icon images 40A, 40B, 40C, 40D, and 40I is enabled. In Fig. 13(b), erroneous operation preventing images 30-1, 30-2, and 30-3 are superimposed on the icon images 40A, 40E, and 40H, respectively, thereby preventing erroneous operation of the individual icon images 40A, 40E, and 40H. In Fig. 13(c), the erroneous operation preventing image 30 is located in a screen area (X3-X4, Y1) of the display screen 10 to prevent erroneous operation of the icon images 40A, 40B, 40E, and 40F. In Fig. 13(d), the erroneous operation preventing image 30 is located in a screen area (X1, Y) of the display screen 10 to prevent erroneous operation of the icon image 40I.

The erroneous operation preventing images 30 of Fig. 13(a) to Fig. 13(d) can be called up from the state of the display screen 10 of Fig. 12 by such operation as a long-press on the display screen 10, the activation of a dedicated app, or touching a corner of the display screen 10 with a fingertip or the like and dragging to the center. Alternatively, default settings may be set so that the erroneous operation preventing images 30 are displayed in arbitrary places. Those erroneous operation preventing images 30 can be moved or faded out by the user by performing input operation on the erroneous operation preventing images 30.

The fourth embodiment of this invention has, in addition to the first to eighth effects of the first to third embodiments of this invention described above, the following effects:
A ninth effect is that the erroneous operation prevention level can be adjusted. This is because the erroneous operation preventing image 30 can be set also on the display screen 10 that is displayed after the screen lock is unlocked on the initial screen.

The display screen 10 in each embodiment is partitioned into ranges for the sake of simplifying the description of this invention, and the ranges are not to limit the embodiments of this invention in any way. The erroneous operation preventing image 30 can be set in an arbitrary range in the embodiments of this invention.

The erroneous operation preventing images 30 according to the embodiments of this invention may be installed prior to the shipping of the product, or may not be preinstalled, in which case an application is downloaded from a special Web site and activated so that the erroneous operation preventing images 30 are set in the display screen 10 posteriorly.

The scope of this invention includes a screen control program, which uses features that are included in the embodiments described above. In each embodiment described above, processing of the embodiment may be executed by a program, software, or a computer-readable storage medium that is coded with a computer-executable command. The storage medium includes not only portable recording media such as optical discs, floppy (a trademark) disks, and hard disks, but also networks and other transmission media that record and keep data temporarily.

This invention is not dependent on any particular programming language. Those skilled in the art would know that various programming languages can be used to carry out this invention disclosed herein.

This application claims priority from Japanese Patent Application No. 2013-029779, filed on February 19, 2013, the entire disclosure of which is incorporated herein by reference.

### Reference Signs List

- 1: information processing terminal
- 2: touch panel
- 10: display screen
- 20A-20G: icon image
- 30: erroneous operation preventing screen
- 40A-40I: icon image
- 101: communication unit
- 102: memory unit
- 110: operating system
- 120: erroneous operation preventing module
- 121: display processing unit
- 103: control unit
- 130: touch sensor
- 140: display unit

## Claims

1. An information processing terminal, comprising:
display processing means for displaying on a display unit a first image, which corresponds to an application program, and a second image that is transmissive; and
a control unit for giving an instruction to the application program based on input operation that is performed on the first image displayed on the display unit,
wherein the control unit is configured to:
disable, when the first image is displayed in a given area that is taken up by the second image, input operation that is performed on the first image; and
change the given area in response to input operation that is performed on the second image.

2. An information processing terminal according to claim 1, wherein, when detecting input operation that is performed on the first image displayed in the given area that is taken up by the second image, the control unit is configured so as not to give an instruction to the application program corresponding to the first image.

3. An information processing terminal according to claim 1 or 2, wherein the control unit changes a place in the display unit where the given area is displayed based on input operation that is performed on the second image, and disables input operation that is performed on the first image that overlaps with the changed given area.

4. An information processing terminal according to any one of claims 1 to 3, wherein the control unit is capable of performing input operation on the second image, which comprises a moving instruction, an area changing instruction, and a removing instruction.

5. An information processing terminal according to any one of claims 1 to 4, wherein the control unit is capable of setting a size of the second image, a number of the second images, a number of the second images that overlap with each other, or a transmittance of the second image to an arbitrary value based on input operation that is performed on the display unit.

6. An information processing terminal according to any one of claims 1 to 5, wherein the control unit is capable of disabling the second image based on input operation that comprises a tap or hover.

7. A screen control method for an information processing terminal, comprising:
displaying a first image, which corresponds to an application program, and a second image that is transmissive;
giving an instruction to the application program based on input operation that is performed on the displayed first image;
disabling input operation that is performed on the first image when the first image is displayed in a given area that is taken up by the second image; and
changing the given area in response to input operation that is performed on the second image.

8. A screen control method for an information processing terminal according to claim 7, further comprising avoiding giving an instruction to the application program corresponding to the first image when detecting input operation that is performed on the first image displayed in the given area, which is taken up by the second image.

9. A screen control method for an information processing terminal according to claim 7 or 8, further comprising changing a place in the display unit where the given area is displayed based on input operation that is performed on the second image, and disabling input operation that is performed on the first image that overlaps with the changed given area.

10. A screen control method for an information processing terminal according to any one of claims 7 to 9, wherein capable of performing input operation on the second image, which comprises a moving instruction, an area changing instruction, and a removing instruction.

11. A screen control method for an information processing terminal according to any one of claims 7 to 10, wherein capable of setting a size of the second image, a number of the second images, a number of the second images that overlap with each other, or a transmittance of the second image to an arbitrary value based on input operation that is performed on the display unit.

12. A screen control method for an information processing terminal according to any one of claims 7 to 11, wherein capable of disabling the second image based on input operation that comprises a tap or hover.

13. A screen control program for causing an information processing terminal to carry out the processing of:
displaying on a display unit a first image, which corresponds to an application program, and a second image that is transmissive;
giving an instruction to the application program based on input operation that is performed on the first image displayed on the display unit,
disabling input operation that is performed on the first image when the first image is displayed in a given area that is taken up by the second image; and
changing the given area in response to input operation that is performed on the second image.

14. A screen control program according to claim 13, comprises processing of avoiding giving an instruction to the application program corresponding to the first image when detecting input operation that is performed on the first image displayed in the given area that is taken up by the second image.

15. A screen control program according to claim 13 or 14, comprises processing of changing a place in the display unit where the given area is displayed based on input operation that is performed on the second image, and disabling input operation that is performed on the first image that overlaps with the changed given area.

16. A screen control program according to any one of claims 13 to 15, wherein perform input operation on the second image, which comprises a moving instruction, an area changing instruction, and a removing instruction.

17. A screen control program according to any one of claims 13 to 16, wherein capable of setting a size of the second image, a number of the second images, a number of the second images that overlap with each other, or a transmittance of the second image to an arbitrary value based on input operation that is performed on the display unit.

18. A screen control program according to any one of claims 13 to 17, wherein capable of disabling the second image based on input operation that comprises a tap or hover.
